**Europäisches Patentamt**

**European Patent Office**

**Office européen des brevets**

(11) Veröffentlichungsnummer: **0 036 904**
**B1**

(12) **EUROPÄISCHE PATENTSCHRIFT**

(45) Veröffentlichungstag der Patentschrift:
**22.02.84**

(51) Int. Cl.³: **C 08 F 2/26**

(21) Anmeldenummer: **80104322.5**

(22) Anmeldetag: **23.07.80**

(54) **Verfahren zur Herstellung wässriger Kunststoffdispersionen.**

(30) Priorität: **02.04.80 DE 3012821**

(43) Veröffentlichungstag der Anmeldung:
**07.10.81 Patentblatt 81/40**

(45) Bekanntmachung des Hinweises auf die Patenterteilung:
**22.02.84 Patentblatt 84/8**

(84) Benannte Vertragsstaaten:
**DE FR GB IT NL**

(56) Entgegenhaltungen:
**DE - A - 2 015 660**
**DE - A - 2 330 561**
**FR - A - 1 344 971**

**HOUBEN-WEYL: "Methoden der Organischen Chemie,
Band XIV/1, 1961 Stuttgart, DE, Seiten 339-341**

Die Akte enthält technische Angaben, die nach dem Eingang der Anmeldung eingereicht wurden und die nicht in dieser Patentschrift enthalten sind.

(73) Patentinhaber: **BAYER AG, Zentralbereich Patente, Marken und Lizenzen, D-5090 Leverkusen 1, Bayerwerk (DE)**

(72) Erfinder: **Schmidt, Adolf, Dr., Roggendorfstrasse 67, D-5000 Koeln 80 (DE)**
Erfinder: **Böckmann, August, Dr., Bärenstrasse 23, D-4150 Krefeld 1 (DE)**

**0 036 904**

## Verfahren zur Herstellung wäßriger Kunststoffdispersionen

Die Erfindung betrifft ein Verfahren zur Einstellung des mittleren Teilchendurchmessers wäßriger Kunststoffdispersionen.

Es ist bekannt, den mittleren Teilchendurchmesser von Dispersionsteilchen nach dem sogenannten »Keimlatexverfahren« gezielt einzustellen (Houben-Weyl, Band XIV/1 [1961], Seiten 339 bis 342 und Seiten 878 bis 880). Nach dem Keimlatexverfahren legt man eine bestimmte Menge eines Latex als Keime vor und führt dann ausgehend von diesen Keimen die Herstellung der Dispersion durch Polymerisation eines Monomeren durch. Nach einer aus Houben-Weyl, Band XIV/1 (1961) auf Seite 340 bekannten Korrelation ist dann — unter der Voraussetzung, daß während der Polymerisation keine neuen Latexteilchen als Keime entstehen und die Dichte des Polymerisats während der Polymerisation konstant bleibt — der mittlere Durchmesser der so gewonnenen Latexteilchen abhängig von dem mittleren Durchmesser der Teilchen im Keimlatex und der Kubikwurzel des Quotienten aus der Menge des Polymerisats nach der Polymerisation und der Menge des Polymerisats im Keimlatex. Falls man nach diesem Verfahren den mittleren Durchmesser der Latexteilchen wesentlich vergrößern will, muß man daher die Menge des Polymerisats im Keimlatex möglichst klein halten. Die Polymerisation, insbesondere die Emulsionspolymerisation, verläuft unter diesen Umständen sehr langsam, und es ist sehr schwierig, eine Nachdosierung des Emulgators so vorzunehmen, daß einerseits keine neuen Teilchen entstehen und andererseits keine Koagulation eintritt.

Die Anzahl der Latexteilchen in einer Dispersion ist nach einer aus J. Chem. Physics 16, 592 (1948), bekannten Korrelation proportional der Konzentration des Initiators und des Emulgators, die in an sich üblicher Weise bei der Polymerisation zugesetzt werden. Eine für das Keimlatexverfahren notwendige Herabsetzung der Teilchenzahl kann also nur erreicht werden durch eine Herabsetzung der Konzentration des Emulgators und/oder des Initiators. Dies ist jedoch nur sehr beschränkt möglich, da bei starker Herabsetzung der Emulgatorkonzentration bei einer Polymerisation in der Regel Koagulation eintritt und die Initiatorkonzentration im Interesse einer möglichst quantitativen Polymerisatausbeute nicht beliebig vermindert werden kann (geringe Ausbeuten, Nicht-Einsetzen der Polymerisation).

Es ist auch versucht worden (Houben-Weyl, Band XIV/1, Seite 336 [1961]), durch die Auswahl des Emulgators Einfluß auf die Größe der Latexteilchen in der Kunststoffdispersion zu nehmen. So wird z. B. vorgeschlagen, zur Herstellung grobteiliger Dispersionen nichtionogene Emulgatoren zu verwenden. Diese verlangsamen jedoch die Polymerisation und verleihen den Dispersionen eine vielfach unerwünschte Elektrolyt- und Gefrierstabilität.

Bekannt ist ferner, daß bestimmte, zur Tensidklasse der Carboxylate zählende Emulgatoren größere Latexteilchen liefern als beispielsweise Alkylsulfonate oder Alkylsulfate mit Kohlenstoffkettenlängen von 10 bis 18 Kohlenstoffatomen (Houben-Weyl, Band XIV/1, Seite 336 sowie Seite 203 [1961]).

Carboxylatemulgatoren sind jedoch nur im alkalischen Reaktionsmilieu wirksam. Technisch wichtige Monomere können jedoch vielfach nicht im alkalischen Milieu ohne Nachteile polymerisiert werden (Houben-Weyl, Band XIV/1, Seiten 167 bis 170 sowie 985 bis 989 [1961]).

Als im sauren und alkalischen Reaktionsmilieu einsetzbare Emulgatoren sind Alkylsulfonate bekannt. So werden beispielsweise Alkalialkansulfonate mit hohem Monosulfonatgehalt bei der Emulsionspolymerisation von Monomeren wie beispielsweise Vinylchlorid und Vinylchloridcomonomeren-Mischungen allein (Houben-Weyl, 4. Auflage, Band XIV/1, Teil 1, Seiten 870 ff. sowie 196 ff. [1961]) oder in Kombination mit anderen Emulgatoren eingesetzt (DE-OS 2 429 326).

Aus der DE-OS 2 429 326 ist bekannt, Alkalialkansulfonat zusammen mit einem Alkali-arylsulfonat als Emulgator bei der Polymerisation des Vinylchlorids zu verwenden. Die Alkanreste der Alkalialkansulfonate haben eine Kettenlänge von 10 bis 18 Kohlenstoffatomen.

In der DE-OS 2 633 835 wird die Verwendung der Natriumsalze eines isomeren Gemisches sulfongruppenhaltiger Alkyl-disulfonsäure-diarylester als Emulgator bei der Polyvinylchloridherstellung beschrieben. Es ist außerdem bekannt, Alkalisulfonate hohen Monosulfonatgehaltes bei der Emulsionspolymerisation von Vinylchlorid und Vinylchlorid und Comonomeren allein oder in Kombination mit anderen Emulgatoren einzusetzen (DE-OS 2 429 326).

Gleichzeitig ist aber bekannt, daß anionische Emulgiermittel, wie Alkylsulfate, Alkylsulfonate, Alkylaryl- und Arylalkylsulfonate als besonders wirksame Primäremulgiermittel in bereits niedriger Konzentration für die Herstellung sehr feinteiliger Dispersionen ausreichen (Dispersionen synthetischer Hochpolymerer, Teil I [Eigenschaften, Herstellung, Prüfung], Springer Verlag Wien, Heidelberg, New York, Seite 64 [1969]).

Erfindungsgemäß werden wäßrige stabile Kunststoffdispersionen mit einem mittleren Durchmesser der Dispersionsteilchen im Bereich von etwa 50 bis 500 nm und einem Feststoffgehalt von 5 bis 50 Gew.-Teilen, bezogen auf 100 Gew.-Teile der gesamten Dispersion, in Gegenwart eines Emulgatorsystems hergestellt, das 15 bis 100 Gew.-Teile eines Alkalisalzes von Polysulfonsäuren von Alkanen mittlerer Kettenlänge, bezogen auf 100 Gew.-Teile des gesamten Emulgatorsystems, enthält.

Polysulfonsäuren eines Alkans mittlerer Kettenlänge enthalten erfindungsgemäß 2 oder mehr Sulfonsäuregruppen. Vorzugsweise werden Gemische mit verschiedenem Sulfonierungsgrad im

wesentlichen mit 2 und 3 Sulfonsäuregruppen eingesetzt. Der Sulfonierungsgrad liegt im allgemeinen im Bereich von 2 bis 4, bevorzugt von 2 bis 3.

Alkane mittlerer Kettenlänge sind gesättigte, geradkettige oder verzweigte Kohlenwasserstoffe, bevorzugt geradkettige Kohlenwasserstoffe, mit etwa 8 bis 22 Kohlenstoffatomen. Bevorzugt können Polysulfonsäuren von Alkanen mit einer mittleren Kohlenstoffzahl von 13 bis 17 Kohlenstoffatomen verwendet werden.

Im allgemeinen werden Polysulfonsäuren von Alkanen verschiedener Kettenlänge eingesetzt.

Als Alkalisalze seien im wesentlichen die Natrium- und Kaliumsalze genannt.

Die Herstellung der Alkalisalze der Alkansulfonsäuren ist an sich bekannt. Beispielsweise kann man sie durch Sulfochlorierung der Alkane und anschließende Verseifung mit einem Alkalihydroxid herstellen (Chemie und Technologie der Paraffin-Kohlenwasserstoffe, Akademie-Verlag, Berlin, 1956, Seiten 395 bis 474).

Man erhält erfindungsgemäß einzusetzende Emulgatoren mit einem hohen Anteil an Polysulfonsäuren bzw. deren Alkalisalze, wenn man beispielsweise die Alkane möglichst weitgehend sulfochloriert und anschließend verseift. Noch vorhandene Anteile an Monosulfonsäuren können gegebenenfalls abgetrennt werden. Eine Abtrennung kann beispielsweise erfolgen durch Extraktion mit Diethylether.

Der bei der Polymerisation eingesetzte Emulgator kann außer dem erfindungsgemäßen Anteil an Polysulfonaten eines Alkans mittlerer Kettenlänge andere für die Polymerisation von Monomeren an sich übliche Emulgatoren enthalten. Beispielsweise seien die folgenden üblichen Emulgatoren genannt: Monosulfonate von Alkanen mittlerer Kettenlänge mit einer endständigen Sulfonatgruppe, wie sie beispielsweise durch Umsetzung von Alkylsulfaten mit Natriumsulfit oder durch Anlagerung von Natrium- oder Ammoniumhydrogensulfit an Olefine erhalten werden, oder mit einer Sulfonatgruppe, die an ein sekundäres Kohlenstoffatom eines Alkans gebunden ist, wie man sie beispielsweise durch Verseifung der entsprechenden Paraffinsulfochloride herstellen kann.

Besonders vorteilhaft kann man ein erfindungsgemäßes Emulgatorsystem herstellen, wenn man ein Alkan in an sich bekannter Weise so sulfochloriert, daß mono- und polysulfochlorierte Alkane entstehen, die dann hydrolysiert werden. Durch Veränderung des Grades der Sulfochlorierung kann man den Anteil der Polysulfonaten im Emulgatorsystem festlegen. Eine Veränderung der Sulfochlorierungsgrade wird im allgemeinen durch eine Veränderung der stöchiometrischen Anteile der Ausgangsverbindungen erreicht.

Weitere übliche Emulgatoren, die beispielsweise mit dem erfindungsgemäßen Emulgator kombiniert werden können, sind beispielsweise Alkylbenzolsulfonate mit geradkettigen Alkylresten mit 12 bis 14 Kohlenstoffatomen, Sulfobernsteinsäureester, wie beispielsweise Natriumdioctylsulfosuccinat, Fettalkoholsulfonate, wie Natriumlaurylsulfat, Gemische von Fettalkoholsulfaten mit 10 bis 18 Kohlenstoffatomen, Sulfate substituierter Polyglykolether aus Fettalkoholen mit 10 bis 20 Kohlenstoffatomen, welche mit 3 bis 20 Mol Ethylenoxid umgesetzt und nachfolgend sulfatiert werden, oder aus Alkylphenolen, wie z. B. p-Nonylphenolen, welche mit 3 bis 30 Mol Ethylenoxid umgesetzt und nachfolgend sulfatiert (das heißt, mit Schwefelsäure verestert) werden. »Grenzflächenaktive Substanzen«, Chemische Taschenbücher 14, Verlag Chemie Weinheim (1971).

Im alkalischen Reaktionsmilieu können gegebenenfalls auch zur Tensidklasse der Carboxylate zählende Emulgatoren, wie Natriumlaurat, Natriumstearat, Alkalisalze modifizierter, sich von der Abietinsäure ableitender Harzsäuren (Houben-Weyl, Band XIV/1, Seite 195 [1961]) oder Dimerisierungsprodukte ungesättigter Fettsäuren, wie z. B. der Linolsäure (Houben-Weyl, Band XIV/1, Seite 203 [1961]) eingesetzt werden.

Es ist selbstverständlich auch möglich, Gemische dieser Emulgatoren einzusetzen.

Bevorzugte Emulgatoren, die erfindungsgemäß verwendet werden können, bestehen beispielsweise aus dem Polysulfonat, aus Alkylsulfonaten und Alkylsulfaten. Im alkalischen Reaktionsmilieu werden vorzugsweise Emulgatorsysteme, bestehend aus dem Polysulfonat, Alkylsulfonaten, Salzen von Fettsäuren, wie z. B. Natriumlaurat oder Salzen von Harzsäuren, eingesetzt.

Es ist möglich, neben den üblichen anionischen Emulgatoren auch nichtionogene Tenside einzusetzen. Zu den nichtionogenen Tensiden zählen Stoffe aus der Tensidklasse der Polyglykolether, Alkylphenolpolyglykolether, Acylpolyglykolether, Hydroxyalkyl-Fettsäureamide und ihre Ethylenoxid-Addukte, Fettamin-Polyglykolether, Polyadditionsprodukte aus Ethylenoxid und Propylenoxid.

Bevorzugte erfindungsgemäße Emulgatorkombinationen bestehen dann beispielsweise aus gleichen Anteilen eines anionischen Tensids, eines nichtionogenen Tensids und eines Polysulfonats. Vorzugsweise werden Kombinationen, bestehend aus einem p-Nonylphenol, welches mit 10 bis 30 Mol Ethylenoxid umgesetzt ist, aus einem Alkylsulfat oder einem Alkylsulfonat mit 10 bis 18 Kohlenstoffatomen und Natriumpolysulfonaten zur Herstellung verhältnismäßig grobteiliger und sehr stabiler Dispersionen verwendet.

Mit Hilfe der erfindungsgemäßen Emulgatorsysteme ist es möglich, radikalisch in Emulsion homo- und copolymerisierbare Monomere in die entsprechenden Polymerisatdispersionen zu überführen. Es kann sich hierbei um Homopolymerisate oder um Mischpolymerisate handeln.

Als Monomere, die in Gegenwart des erfindungsgemäßen Emulgatorsystems polymerisiert werden können, seien beispielsweise genannt: Ethylen, Butadien, Chloropren, Styrol, 1-Methylstyrol, Vinylchlorid, Vinylidenchlorid, Vinylacetat, Vinylpropionat, Vinylester von Gemischen aus syntheti-

3

schen gesättigten Monocarbonsäuren mit Kettenlängen von etwa 9 bis 11 Kohlenstoffatomen, welche beispielsweise aus einem Olefinschnitt mit 8 bis 10 Kohlenstoffatomen nach einer modifizierten »Koch-Reaktion« hergestellt werden, Acrylnitril, Methacrylnitril, Acrylsäureester, wie Methylacrylat, Ethylacrylat, n-Butylacrylat, 2-Ethylhexyl-acrylat, Methacrylsäureester, wie Methylmethacrylat, Ethylmethacrylat und n-Butylmethacrylat.

Neben den genannten Monomeren oder deren Gemischen können, in an sich bekannter Weise, auch wasserlösliche Monomere, wie Methacrylsäure, Acrylsäure, Methacrylamid, Acrylamid, Maleinsäurehalbester und Itaconsäure in üblichen Mengen, beispielsweise 2 bis 6 Gew.-%, bezogen auf das gesamte Monomerengemisch zur Polymerisation eingesetzt werden.

Ferner können neben den bisher genannten Monomeren vernetzend wirkende Monomere, wie beispielsweise Divinylbenzol, Divinylether, Dioldiacrylate, Triallylverbindungen, wie beispielsweise Triallylcyanurat, N-Methylolacrylamid, N-Methylolmethacrylamid oder die Ether dieser Methylolverbindungen zur Herstellung vernetzter Polymerisate oder nachvernetzbarer Polymerisate eingesetzt werden.

Erfindungsgemäß ist es also möglich, Polymerisate herzustellen, die durch die definiert eingestellte Teilchengröße besondere Eigenschaften haben. Diese Eigenschaften werden im wesentlichen durch die Größe der Latexteilchen bestimmt. Es ist bekannt, daß für die technologischen Eigenschaften von Kunststoffdispersionen die Teilchengröße des dispergierten Polymers und ihre Teilchengrößenverteilung eine entscheidende Bedeutung haben (F. Hölscher, Dispersionen synthetischer Hochpolymerer, Teil I, Eigenschaften, Herstellung und Prüfung, Springer-Verlag, Berlin, Heidelberg, New York, 1969, Seite 8, letzter Abschnitt). Teilchengröße und Teilchengrößenverteilung in der Dispersion sind in starkem Maße abhängig von der Art der Herstellung einer Dispersion.

Bevorzugte erfindungsgemäß herstellbare Kunststoffdispersionen sind: Polyvinylchloriddispersionen, n-Butacrylat/Styrol/Methacrylsäure-Copolymerisatdispersionen, Butadien/Styrol/Copolymerisatdispersionen mit hohem und niedrigem Styrolanteil, welche im Copolymerisat Carboxylgruppen eingebaut enthalten können; Polystyroldispersionen, Styrol/Divinylbenzol/Methacrylsäure-Copolymerisatdispersionen, vernetzte und unvernetzte Poly-n-butylacrylat-Dispersionen, Styrol/Acrylnitril-Copolymerisatdispersionen mit überwiegendem Styrolanteil; Copolymerisatdispersionen des Methylmethacrylats mit (Meth)Acrylsäureestern; Copolymerisatdispersionen des n-Butylacrylats mit Styrol, Hydroxypropylacrylat mit Methacrylsäure; Copolymerisatdispersionen des n-Butylacrylats mit Acrylnitril und Methacrylsäure; Copolymerisatdispersionen des n-Butylacrylats mit Styrol, Acrylnitril und Methacrylsäure.

Erfindungsgemäß werden die wäßrigen Kunststoffdispersionen in Gegenwart eines oder mehrerer Initiatoren hergestellt. Als Initiatoren seien beispielsweise die an sich bekannten, eine radikalische Polymerisation initiierenden, thermisch in Radikale zerfallenden Substanzen oder Substanzgemische genannt (Literatur: Houben-Weyl, Band XIV/1, Seiten 209 bis 297 [1961]).

So ist es möglich, die Polymerisation mit wasserlöslichen oder mit in Wasser nur sehr wenig löslichen Radikalbildnern zu initiieren. Als anorganische Radikalbildner seien beispielsweise Peroxodisulfate, wie Kaliumperoxodisulfat, Ammoniumperoxodisulfat, Natriumperoxodisulfat oder Kombinationen der genannten Initiatoren mit reduzierenden Verbindungen, wie z. B. Natriumbisulfit, Natriumpyrosulfit, Formamidinsulfinsäure und Natriumformaldehydsulfoxylat genannt.

Auch wasserlösliche Derivate der Azodinitrile kommen als Initiatoren in Betracht (Houben-Weyl, Band XIV/1, Seiten 221 und 222 [1961]).

Zur Herstellung besonders salzarmer Dispersionen können Wasserstoffperoxid oder organische Peroxide, gegebenenfalls in Kombination mit reduzierenden organischen Verbindungen, wie Benzoin, Mono- und Dihydroxyaceton, Ascorbinsäure, Sorbose, Fructose, Glucose, Mannose und Schwermetallsalzen in komplexgebundener Form, wie z. B. Eisen-(II)-Salze, komplexiert mit Salzen der Ethylendiamintetraessigsäure, verwendet werden.

Bevorzugte Initiatoren zur Herstellung der erfindungsgemäßen wäßrigen Kunststoffdispersionen sind Kaliumperoxodisulfat, Natriumperoxodisulfat, Ammoniumperoxodisulfat oder deren Gemische, die erwähnten Alkaliperoxodisulfate in Kombination mit Natriumpyrosulfit sowie tert. Butylhydroperoxid in Kombination mit Natriumformaldehydsulfoxylat.

Neben den Initiatoren können in Verbindung mit den erfindungsgemäßen Polysulfonaten noch das Molekulargewicht des Polymerisats regelnde Verbindungen, wie Mercaptane, beispielsweise tert.-Dodecylmercaptan, Dodecylmercaptan, Diisopropylxanthogendisulfid, Methacrolein, Ölsäure, Tetrachlorkohlenstoff oder Tetrabromkohlenstoff eingesetzt werden.

Der mittlere Teilchendurchmesser der Dispersionsteilchen kann in den Kunststoffdispersionen erfindungsgemäß durch Veränderung des Polysulfonsäureanteils im Emulgatorsystem im Bereich von 50 bis 500 nm auf einen gewünschten Wert eingestellt werden.

So wurde ein Verfahren zur Einstellung eines mittleren Teilchendurchmessers von Dispersionsteilchen in wäßrigen Kunststoffdispersionen, hergestellt durch Polymerisation der Monomeren des Kunststoffes in Gegenwart von Wasser, eines Initiators und eines Emulgatorsystems gefunden, das dadurch gekennzeichnet ist, daß man die Gesamtmenge des Initiators und des Emulgatorsystems, das einen Anteil eines Alkalisalzes einer Polysulfonsäure eines Alkans mittlerer Kettenlänge enthält, etwa gleich hält und den Anteil des Alkalisalzes der Polysulfonsäure im Bereich von 15 bis 100 Gew. Teilen, bezogen auf 100 Gew.-Teile des gesamten Emulgatorsystems, verändert.

Wesentlicher Vorteil des erfindungsgemäßen Verfahrens und überraschend ist es, daß man die Gesamtmenge des Emulgatorsystems und des Initiatorsystems etwa gleich halten kann, einen im Hinblick auf die Polymerisationsgeschwindigkeit befriedigenden Verlauf der Polymerisationsreaktion erzielt und dennoch, in Abhängigkeit von der jeweiligen Zusammensetzung des Emulgatorsystems, zu Kunststoffdispersionen gelangt, die einen definierten mittleren Teilchendurchmesser haben, welcher nach Maßgabe der jeweiligen Zusammensetzung des Emulgatorsystems aber jeweils unterschiedlich ist.

Das Emulgatorsystem kann in einer Gesamtmenge von 0,05 bis 10 Gew.-Teilen, bezogen auf 100 Gew.-Teile des bei der Polymerisation anwesenden Wassers, eingesetzt werden. Anteile von 0,5 bis 5 Gew.-Teile, bezogen auf 100 Gew.-Teile des bei der Polymerisation anwesenden Wassers, werden bevorzugt.

Der Anteil des Monomeren, bezogen auf das Gesamtgewicht von Monomeren und Wasser, beträgt 5 bis 50 Gew.-%, vorzugsweise 10 bis 35 Gew.-%.

Je größer der Polysulfatanteil im Emulgatorsystem ist, desto größer ist der mittlere Teilchendurchmesser der Dispersionsteilchen. Im Einzelfall ist der festzusetzende Anteil des Polysulfonats im Emulgatorsystem abhängig von den jeweiligen Polymerisationsbedingungen und der Art und Menge der jeweils zur Polymerisation gelangenden Monomeren und kann leicht durch Vorversuche innerhalb der erfindungsgemäßen Grenzen festgelegt werden.

Bevorzugt werden mit Hilfe des erfindungsgemäßen Verfahrens Dispersionsteilchen im Bereich von etwa 150 bis 300 nm hergestellt.

Vorteilhafterweise kann so auf das aufwendige Keimlatexverfahren verzichtet werden.

Selbstverständlich ist es jedoch auch möglich, zusätzlich zu dem erfindungsgemäßen Verfahren, durch Variation der Gesamtmenge des Emulgators Einfluß auf die Teilchengröße der Latexteilchen zu nehmen.

In einer anderen Ausführungsform des erfindungsgemäßen Verfahrens kann man mit Hilfe des erfindungsgemäßen Verfahrens einen definierten Keimlatex von großen Latexteilchen herstellen und diesen mit Hilfe des »Keimlatexverfahrens« in eine noch grobteiligere definierte Form überführen.

Selbstverständlich ist bei genau festgesetzter Gesamtkonzentration des Emulgatorsystems in Wasser und bei genau festgesetztem Polysulfonatanteil im Emulgatorsystem sowie bei genau festgesetzter Initiatorkonzentration im Wasser zu Beginn der Polymerisation die resultierende Partikelgröße der Dispersion am Ende der Polymerisation zudem noch abhängig vom Verhältnis Monomeres zu Wasser, welches zu Beginn der Polymerisation festgelegt wurde.

Wenn also beispielsweise die Herstellung einer besonders grobteiligen Dispersion beabsichtigt ist, wird man mit sehr geringen Mengen eines Emulgatorsystems, bestehend vorwiegend aus dem Polysulfonat, eine möglichst geringe Menge eines möglichst grobteiligen Saatlatex in einer vorgeschalteten Emulsionspolymerisation erzeugen und danach diesen Saatlatex mit Hilfe des Keimlatexverfahrens, unter Zulauf von Wasser, Monomeren, Emulgatorlösung und gegebenenfalls zusätzlicher Initiatorlösung in an sich bekannter Weise weiter vergröbern.

In einer besonderen Ausführungsform des erfindungsgemäßen Verfahrens stellt man also zunächst nach dem erfindungsgemäßen Verfahren einen Keimlatex mit definiertem Durchmesser der einzelnen Partikel her und kann danach nach dem an sich bekannten Keimlatexverfahren Partikel bis zu einem Durchmesser von etwa 1000 nm herstellen.

Das erfindungsgemäße Verfahren kann in diskontinuierlicher, halbkontinuierlicher und vollkontinuierlicher Verfahrenstechnik Verwendung finden.

Bei diskontinuierlichem und halbkontinuierlichem Verfahren werden die erfindungsgemäßen Emulgatorkombinationen vorzugsweise in der ersten Phase der Polymerisation eingesetzt, welches als »Teilchenbildungsperiode« bezeichnet wird (G. Henrici-Olivé und S. Olivé, Polymerisation, Katalyse-Kinetik-Mechanismen, Chemische Taschenbücher, Verlag Chemie Weinheim/Bergstraße, Nr. 8, Seiten 72 bis 77). Zur Stabilisierung der Dispersionen in der »Periode Konstanter Polymerisationsgeschwindigkeit« können auch bekannte polysulfonatfreie Emulgatoren nachdosiert werden.

Nach einer bevorzugten Ausführung eines kontinuierlichen Verfahrens führt man die Polymerisation in mehreren hintereinandergeschalteten Polymerisationsräumen aus, wobei in dem ersten Polymerisationsraum unter Verwendung erfindungsgemäßer polysulfonathaltiger Emulgatorsysteme Dispersionsteilchen der gewünschten mittleren Teilchengröße gebildet werden. In dem Maße, wie die Ausgangskomponenten in den ersten Reaktionsraum eingegeben werden, tritt Reaktionsgemisch vom ersten in den zweiten, vom zweiten in den dritten, vom dritten in den vierten usw. Reaktionsraum ein.

Derartige kontinuierliche Verfahren in Rührkessel- oder Autoklav-Kaskaden sind an sich bekannt und werden beispielsweise zur Herstellung von Butadien-Styrol-Dispersionen angewendet (Chemische Technologie, Winnacker-Küchler, Carl Hanser Verlag, München, 1960, Seite 388 ff.).

Selbstverständlich kann die Polymerisation auch in Reaktoren erfolgen, welche in einzelne Kammern aufgeteilt sind, die durch eine gemeinsame Rührwelle durchmischt werden (DE-PS 1 125 175).

Es ist auch möglich, eine kontinuierliche Polymerisation in einem einzigen kontinuierlich durchströmten und durchmischten Reaktor durchzuführen. In einem solchen Reaktor kann man besonders vorteilhaft grobteilige PVC-Dispersionen herstellen.

Das erfindungsgemäße Verfahren zur Einstellung eines definierten Teilchendurchmessers von Dispersionsteilchen einer wäßrigen Kunststoffdispersion kann beispielsweise wie folgt durchgeführt werden.

In einer Meßreihe führt man unter vergleichbaren Bedingungen die Polymerisation bei gleichbleibender Gesamtemulgatormenge, aber unterschiedlichem Anteil an Polysulfonaten durch. Die Teilchendurchmesser der erhaltenen Dispersionen werden in an sich bekannter Weise durch bekannte Methoden ermittelt (Ultrazentrifuge, Elektronenmikroskop, Winkelabhängigkeit der Lichtstreuung, Laser-Korrelations-Spektroskopie). Durch Korrelation der so erhaltenen Teilchendurchmesser in der Meßreihe mit dem Polysulfonatanteil der Gesamtemulgatormenge lassen sich für jedes spezielle Polymere die Bedingungen zur Herstellung eines bestimmten definierten Teilchendurchmessers festlegen.

Nach dem erfindungsgemäßen Verfahren erhält man einheitliche Dispersionen von annähernd gleichem mittleren Teilchendurchmesser. Da die physikalischen Eigenschaften von Kunststoffdispersionen, die besonders für die Anwendung von Bedeutung sind, nicht nur abhängig sind von der mittleren Teilchengröße, sondern auch von den Anteilen von Teilchen, welche vom mittleren Durchmesser abweichen, kann man durch Mischung verschiedener Dispersionen mit jeweils annähernd gleichem Teilchendurchmesser neue Kunststoffdispersionen herstellen, die eine definierte Verteilung von Latexteilchen verschiedener Größe besitzen. Die so erhaltenen Dispersionen sind unabhängig von der zwangsläufigen Durchmesser-Verteilung eines bestimmten Herstellungsverfahrens und können in jeder beliebigen Teilchengrößenverteilung hergestellt werden.

Das erfindungsgemäße Verfahren kann auch zur Herstellung von Dispersionen mit geringfügig erhöhtem mittleren Teilchendurchmesser verwandt werden. Durch eine geringfügige Erhöhung des Teilchendurchmessers, der sich mit Hilfe des erfindungsgemäßen Verfahrens leicht definiert durchführen läßt, kann bei sonst praktisch unveränderten Eigenschaften der Dispersion das Fließvermögen günstig beeinflußt werden.

Grobteilige Polyvinylchloriddispersionen mit Latexteilchendurchmessern von 500 bis 2000 nm sind für die Herstellung von Polyvinylchlorid Plastisolen besonders gut geeignet (Houben-Weyl, Band XIV/1, Seite 878 [1961]), denn das Fließvermögen von Polyvinylchlorid-Plastisolen aus Emulsionspolymerisaten nimmt mit wachsender Teilchengröße zu. Mit Hilfe des erfindungsgemäßen Verfahrens erhält man besonders günstige Pastenviskositäten.

Grobteilige Dispersionen auf Acrylat- oder Butadienbasis können in an sich bekannter Weise als Pfropfgrundlage bei der Herstellung schlagzäher Kunststoffe verwendet werden. Hierbei müssen die weichen, innen meist chemisch vernetzten Teilchen der Pfropfgrundlage, eine bestimmte Mindestteilchengröße besitzen, um hohe Kerbschlagzähigkeitswerte zu erzielen (»Die Markomolekulare Chemie«, 101 [1967]. Seiten 200 bis 213; »Angew. Makromolekulare Chemie«, 29/30 [1973]. Seiten 1 bis 23}. Die nach dem erfindungsgemäßen Verfahren hergestellten Acrylat- oder Butadiendispersionen können besonders vorteilhaft als Pfropfgrundlage verwendet werden.

Nach dem erfindungsgemäßen Verfahren ist auch der Aufbau kugelschalenförmig strukturierter Dispersionsteilchen mit weichem Kern und harter Schale oder hartem Kern und weicher Schale möglich.

## Beispiele

### A) Ausgangsstoffe (Monomere, Wasser, Initiator)

Bei den nachfolgenden Versuchen wurden handelsübliche Monomere in frisch destilliertem Zustand verwendet Die Reinheit der Monomeren lag nach GC-Analysen meist über 99,9%.

Das bei den Versuchen eingesetzte Wasser war voll entsalzt und wurde vor seinem Gebrauch unter Durchblasen von $N_2$ ausgekocht. Das verwendete Kaliumperoxidsulfat war analysenrein.

### B) Emulgatoren

Zur Herstellung der in den Beispielen verwendeten Emulgatorsysteme wurden polysulfonathaltige Emulgatoren mit handelsüblichem Emulgatoren abgemischt. Die Herstellung zweier geeigneter polysulfonhaltiger Emulgatorsysteme, welche gewünschtenfalls mit üblichen Emulgatoren kombiniert werden können, ist nachfolgend beschrieben:

### B-1. Emulgatorsystem, enthaltend ca. 70 Gew.-% Natriumalkanpolysulfonat

Ein Gemisch linearer Alkane (8 bis 20 Kohlenstoffatome im Molekül, mittlere Zahl der Kohlenstoffatome ist 15) wird in Gegenwart von Licht mit einem Gasgemisch, bestehend aus 1,1 Gewichtsteilen Schwefeldioxid und 1,0 Gewichtsteil Chlor bei einer Temperatur von 30 bis 40°C unter Rühren und gleichzeitigem Kühlen sulfochloriert. Die Sulfochlorierung wird so lange durchgeführt, bis das Reaktionsgemisch eine Dichte von 1,165 g/cm³ bei 45°C hat. Der Sulfochlorgehalt ist dann bei 15,5 bis 16,0 Gew.-%.

200 g des Sulfierungsgemisches werden tropfenweise zu 144 g 50gew.-%iger Natronlauge gegeben, die auf 50 bis 60°C erwärmt wurde. Durch Kühlen wird das Reaktionsgemisch auf eine Temperatur von 95 bis 100°C gehalten. Nach Beendigung der Umsetzung wird das Reaktionsgemisch durch Zugabe von konzentrierter Natronlauge auf einen pH-Wert von 9 bis 10 eingestellt. Anschließend kühlt man das Reaktionsgemisch auf 60 bis 70°C ab.

In diesem Temperaturbereich fällt Natriumchlorid aus, das abfiltriert oder abzentrifugiert wird. Die natriumchloridfreie Lösung wird im Vakuum zur Trockne eingedampft. Man erhält hierbei 220 g Natriumalkan-sulfonat. Das Natriumalkan-sulfonat besteht aus

28 Gew.-% Natrium-alkan-monosulfonat,
67 Gew.-% Natrium-alkan-polysulfonat.

Das so hergestellte Natriumalkan-sulfonat wird als Emulgator allein oder unter Zusatz von Natriumalkan-monosulfonat oder anderer, an sich bekannter anionischer und/oder nichtionogener Tenside zur Polymerisation von Monomeren in Emulsion verwendet.

### B-2. Herstellung eines Emulgatorsystems, enthaltend ca. 90 Gew.-% Natriumalkanpolysulfonat

Ein Gemisch linearer Alkane (8 bis 20 Kohlenstoffatome im Molekül, mittlerer Zahl der Kohlenstoffatome ist 15) wird in Gegenwart von Licht mit einem Gasgemisch, bestehend aus 1,1 Gewichtsteil Schwefeldioxid und 1,0 Gewichtsteil Chlor, bei einer Temperatur von 30 bis 40°C unter Rühren und gleichzeitigem Kühlen sulfochloriert. Die Sulfochlorierung wird so lange durchgeführt, bis das Reaktionsgemisch eine Dichte von 1,250 g/cm³ bei 45°C hat. Der Sulfochlorgehalt ist dann bei 18,0 – 18,5 Gew.-%.

200 g des Sulfierungsgemisches werden tropfenweise zu 170 g 50gew.-%iger Natronlauge gegeben, die auf 50 bis 60°C erwärmt wurde. Durch Kühlen wird das Reaktionsgemisch auf eine Temperatur von 95 bis 100°C gehalten. Nach Beendigung der Umsetzung wird das Reaktionsgemisch durch Zugabe von konzentrierter Natronlauge auf einen pH-Wert von 9 bis 10 eingestellt. Anschließend kühlt man das Reaktionsgemisch auf 60 bis 70°C ab.

In diesem Temperaturbereich fällt Natriumchlorid aus, das abfiltriert oder abzentrifugiert wird. Die natriumchloridfreie Lösung wird im Vakuum zur Trockne eingedampft. Man erhält hierbei ein Gemisch aus 8 g NaCl und 139 g Natriumalkansulfonat. Das Natriumalkansulfonat besteht aus

13,2 Gew.-% Natriumalkan-monosuifat,
86,8 Gew.-% Natriumalkan-polysulfonat.

Das so erhaltene Natriumalkansulfonat wird als Emulgator allein oder unter Zusatz von Natriumalkan-monosulfonat oder anderer an sich bekannter anionischer und/oder nichtionogener Tenside zur Polymerisation von Monomeren in Emulsion verwendet.

### C) Durchführung der Polymerisationsversuche

Serienpolymerisationsversuche, welche in den nachfolgenden Beispielen angeführt sind, wurden in 500 ml fassenden, verkorkten Glasflaschen mit zusätzlichem Kronkorkverschluß (vgl. hierzu Houben-Weyl, Methoden der organischen Chemie, Band XIV/1, Seite 147 [1961]) durchgeführt. Die in Stahlhülsen eingesetzten Flaschen rotierten in einem Wasserthermostat bei einer Drehzahl von 25 Umdrehungen pro Minute (abgekürzt: U/Min. oder UpM). Die Temperatur des Wasserbades, in welches die Flaschen periodisch eintauchten, wurde konstant gehalten. Bei allen Ansätzen wurde unter Ausschluß von Luftsauerstoff gearbeitet. Wurde anders gearbeitet, so ist dies in den nachfolgenden Beispielen ausdrücklich erwähnt.

### D) Auswertung der Versuchsergebnisse

Nach dem Abkühlen auf Zimmertemperatur wurden die 500-ml-Flaschen vollständig entleert und der Inhalt durch ein Perlongewebe mit 30 µ quadratischer Maschenweite gesiebt, das zurückbleibende Koagulat gewaschen und zur Gewichtskonstanz getrocknet. Erfolgte die Polymerisation in Rührgefäßen oder Autoklaven, so wurde das an Rührern, Thermostutzen und Wandungen gegebenenfalls festsitzende Koagulat mit berücksichtigt.

Vom jeweils durchfiltrierten Latex bestimmte man den Feststoffgehalt (Trockenrückstand der Latexeinwaage in %) sowie die Teilchengröße nach der Laser-Korrelations-Spektroskopie. Bei diesem Laser-Streulichtverfahren wird die Information über die Streuteilchen (z. B. Latexteilchen) aus den zeitlichen Fluktuationen des Streulichtes gewonnen, welches mit einem Photovervielfacher registriert wird. Diese Streulicht-Flukationen beruhen auf der irregulären Brownschen Diffusionsbewegung der Partikel. Entsprechend erhält man aus der Autokorrelationsanalyse des Streulicht-Signals den translatorischen Diffusionskoeffizient D der Teilchen, welcher mit dem Teilchendurchmesser d verknüpft ist.

Gleichzeitig läßt sich die zweite Kumulante (K 2) der Korrelationsfunktion bestimmen, die ein Relativmaß für die Breite der Teilchengrößen-Verteilung darstellt (Literatur: H. Z. Cummins, E. R. Pike, Hsg., Photon Correlation and Light Beatin Spectroscopy, Plenum Press, 1974; B. Chu, Laser Light Scattering, Academic Press, 1974; D. E. Koppel, J. Chem. Phys., 57 [1972], 4814). Je stärker der Wert von K 2 gegen Null steht, um so einheitlicher sind die Dispersionsteilchen und um so enger ist die Durchmesserverteilungskurve.

### E) Ausführungsbeispiele

### Beispiel 1

Ein gemäß Vorschrift B.2. hergestellter, stark polysulfonathaltiger Emulgator wird nach Einstellen eines Poly/Mono-Sulfonatverhältnisses von 85/15 und nach Verdünnen auf eine 10%ige wäßrige Lösung in steigenden Mengen einer 10%igen Natriumlaurylsulfatlösung so zugesetzt, daß die Gesamtemulgatormenge im Ansatz konstant bleibt.

Ansätze:

| | |
|---|---|
| Entionisiertes Wasser | 118,3 g |
| 10%iger Polysulfonat-Monosulfonat-Emulgator, | |
| Verhältnis Poly/Mono = 85/15 | 0 bis 130 g |
| 10%ige Lösung von Natriumlaurylsulfat von | 130 bis 0 g |
| (Gewichtssumme der beiden 10%igen Emulgatorlösungen beträgt bei | |
| jedem Ansatz stets 130 g) | |
| 2%ige Kaliumperoxodisulfatlösung | 26,2 g |
| n-Butylacrylat | 112,5 g |
| Gesamtgewicht Ansatz: | 387,0 g |

Zum Polymerisationsverfahren vgl. Ausführungen C. Die Zusammensetzung des Gesamtemulgatorsystems ist also bei jedem Versuch verschieden, seine Konzentration in Wasser bei jedem Versuch gleich (vgl. Tabelle I).

Die Reaktionsparameter betragen:

| | |
|---|---|
| Gesamtemulgatorkonzentration: [E] = | 49,8 g/1000 g Wasser |
| (Monosulfonat + Polysulfonat + Alkylsulfat) | |
| Emulgatormenge, bezogen auf 100 Gew.-Teile Wasser: | 5 Gew.-Teile |
| Anteil eines Alkalisalzes einer Polysulfonsäure: | 0 bis 85 Gew.-Teile |
| bezogen auf 100 Gew.-Teile des gesamten | |
| Emulgatorsystems, | |
| Gewichtsverhältnis Monomeres/Monomeres + Wasser = | 0,3 |
| Polymerisationszeit: | 7 h |
| Polymerisationstemperatur: | 70° C |
| Rotationsgeschwindigkeit der Flaschen: | 25 (Umdrehungen pro Minute) |
| Flaschenvolumen: | 500 ml |
| Maximal erreichbarer Feststoffgehalt der Latices: | 32,56 Gew.-% |

In Tabelle I sind nun die Ergebnisse der Polymerisationsversuche zusammengestellt.

In den ersten 3 Spalten ist die prozentuale Zusammensetzung des erfindungsgemäßen Emulgatorsystems angegeben, wobei die Ansätze in Zeilen 1 und 2 kein erfindungsgemäßes Emulgatorsystem darstellen, da sie weniger als 15 Gew.-% Polysulfonanteil enthalten.

Wie aus Spalte 4 hervorgeht, bleibt der Feststoffgehalt der Dispersionen etwa gleich und ist unabhängig von der Zusammensetzung des jeweiligen Emulgatorsystems. Mit ansteigendem Polysulfonatanteil des Emulgatorsystems wird der Koagulatanteil in den Dispersionen etwas erhöht (vgl. Spalte 5), bleibt aber durchweg geringfügig.

**0 036 904**

Der Spalte 6 ist die erfindungsgemäße Teilchengrößeneinstellung zu entnehmen. Sie liegt vorwiegend im Bereich von etwa 50 bis 300 nm. Zunächst steigt, etwa im Bereich von 15 bis 65 Gew.-% Polysulfonat im Emulgatorsystem, der Dispersionsteilchendurchmesser mit steigendem Polysulfonatzusatz nur langsam an. Ab etwa 65 Gew.-% Polysulfonatanteil erfolgt ein steiler Anstieg der Latexteilchendurchmesser.

Wie aus Spalte 7 hervorgeht, ändert sich K 2, das Maß für die Breite der Latexteilchendurchmesserverteilung, nicht signifikant.

Vor dem Öffnen wurden die gleich hoch gefüllten Flaschen 20 Minuten kräftig geschüttelt. Danach wurde die Zeit abgestoppt, welche bis zum Zusammenbrechen des Schaums verging. Diese Zeit ist, als Maß für die Tendenz des Latex, einen stabilen Schaum zu bilden, in Spalte 8 bei den jeweiligen Versuchen angeführt.

Aus Spalte 8 ersieht man, daß der Polysulfonatzusatz zum Emulgatorsystem zunächst eine entschäumende Wirkung besitzt, welche sehr erwünscht ist. Erst bei hohen Polysulfonatanteilen steigt, infolge der geringer werdenden inneren Oberfläche der Dispersionen, die Tendenz zur Schaumbildung wieder an. (Zunahme der Zahl der Sekunden bis zum Verschwinden des Schaums.)

Tabelle I

| Zusammensetzung des Emulgatorsystems (Gew.-%) | | | Feststoff-gehalt Latex (Gew.-%) | Koagulat-anteil (Gew.-%) bez. auf Monomer | Latex-teilchen-durch-messer d (nm) (Mittel-wert) | K 2 Maßzahl für d-Vertei-lung | Schaum-bildungs-vermögen (sec) |
|---|---|---|---|---|---|---|---|
| Poly-sulfonat | Mono-sulfonat | Na-Lauryl-sulfat | | | | | |
| 0 | 0 | 100 | 31,2 | 0 | 51 | 0,09 | 187 |
| 13,1 | 2,3 | 84,6 | 31,2 | 0 | 50 | 0,11 | 140 |
| 32,7 | 5,8 | 61,5 | 31,4 | 0 | 59 | 0,05 | 95 |
| 42,5 | 7,5 | 50 | 31,3 | 0 | 72 | 0,05 | 86 |
| 52,3 | 9,2 | 38,5 | 31,5 | 0 | 83 | 0,07 | 82 |
| 65,5 | 11,5 | 23,0 | 31,7 | 0,2 | 129 | 0,03 | 80 |
| 68,7 | 12,1 | 19,2 | 31,6 | 0,3 | 135 | 0,04 | 78 |
| 71,9 | 12,7 | 15,4 | 31,4 | 0,4 | 175 | 0,03 | 65 |
| 75,2 | 13,3 | 11,5 | 31,6 | 0,3 | 196 | 0,06 | 88 |
| 78,5 | 13,8 | 7,7 | 31,7 | 0,2 | 237 | 0,07 | 99 |
| 81,8 | 14,4 | 3,8 | 31,8 | 0,6 | 285 | 0,09 | 150 |
| 85 | 15 | 0 | 31,0 | 0,7 | 310 | 0,10 | 205 |

Tabelle I (vgl. Erläuterungen in Text zu Beispiel 1)

9

Beispiel 2

Ein gemäß Vorschrift B.2. hergestellter, stark polysulfonathaltiger Emulgator wird mit einem Alkylmonosulfonat gleicher Kohlenstoffkettenlänge so abgemischt, daß sich 4 im Polysulfonat/Monosulfonat-Verhältnis verschiedene Emulgatorsysteme (A bis D) ergeben:

| Emulgatorsystem | A | B | C | D |
|---|---|---|---|---|
| Gew.-% Monosulfonat | 85 | 50 | 30 | 15 |
| Gew.-% Disulfonat | 15 | 50 | 70 | 85 |

Mit Hilfe dieser Emulgatorsysteme A bis D werden nun verschiedene Monomere und Monomerengemische gemäß Polymerisationsbedingungen C und folgender Rezeptur polymerisiert:

| | |
|---|---|
| Entionisiertes Wasser | 118,3 g |
| 10%iges, wäßriges Emulgatorsystem | 131,25 g |
| 2%ige, wäßrige $K_2S_2O_8$-Lösung | 26,20 g |
| Monomeres oder Monomerengemische | 112,5 g |
| Gesamtgewicht jedes Ansatzes: | 388,25 g |

Die Zusammensetzung des Gesamtemulgatorsystems ist also bei jedem Ansatz verschieden, die Gesamtemulgatorkonzentration ist jedoch bei jedem Versuch jeweils gleich (vgl. Tabelle II).

Die Reaktionsparameter betragen:

Gesamtemulgatorkonzentration: $[E] = 50$ g/1000 g $H_2O$ (Polysulfonat + Monosulfonat).

Tabelle II

| Monomere | | Zusammensetzung des Emulgatorsystems Polysulfonat : Monosulfonat (Gew.-% Verhältnis) | | | | | | | | | | | |
| --- | --- | --- | --- | --- | --- | --- | --- | --- | --- | --- | --- | --- | --- |
| | | 15 : 85 | | | 50 : 50 | | | 70 : 30 | | | 85 : 15 | | |
| | | Fest-stoff-gehalt % | Ko-agulat % bez. a. Mon. | Teil-chen*) d [nm] | Fest-stoff-gehalt % | Ko-agulat % bez. a. Mon. | Teil-chen d [nm] | Fest-stoff-gehalt % | Ko-agulat % bez. a. Mon. | Teil-chen d [nm] | Fest-stoff-gehalt % | Ko-agulat % bez. a. Mon. | Teilchen-Durch-messer d [nm] |
| a | Acrylsäureethylester | 32,2 | 0 | 64 | 32,1 | 1,0 | 152 | 26,8 | 5,2 | 200 | 32,9 | 8,2 | 290 |
| b | Acrylsäure-n-butylester | 32,2 | 0 | 60 | 32,2 | 0 | 105 | 32,2 | 0 | 150 | 32,9 | 0,8 | 260 |
| c | tert.-Butylacrylat | 30,0 | 0 | 55 | 28,0 | 0 | 100 | 27,0 | 0 | 150 | 27,3 | 0,4 | 240 |
| d | 2-Ethylhexylacrylat | 32,0 | 0 | 49 | 32,3 | 0 | 80 | 31,8 | 0 | 110 | 32,3 | 0 | 133 |
| e | Methylmethacrylat | 32,1 | 0 | 62 | 31,5 | 0,7 | 190 | 29,1 | 0,9 | 340 | 30,0 | 3,0 | 950 |
| f | n-Butylmethacrylat | 32,2 | 0 | 52 | 32,3 | >0,1 | 96 | 32,0 | 0 | 130 | 31,8 | 0,3 | 288 |
| g | Styrol | 32,2 | 0 | 63 | 32,2 | >0,1 | 75 | 31,7 | 0 | 95 | 32,4 | 1,1 | 110 |
| h | Styrol: n-Butylacrylat-Gemisch 1 : 1 Gew.-Verhältnis | 31,9 | 0 | 58 | 32,2 | >0,1 | 115 | 31,4 | 0 | 150 | 32,1 | 0,1 | 260 |
| i | n-Butylacrylat: Acryl-nitril-Gemisch 2 : 1 Gew.-Verhältnis | 31,6 | 0 | 61 | 31,8 | 0,1 | 105 | 29,5 | 3,2 | 220 | 29,5 | 3,5 | 270 |

*) d ist mittlerer Dispersionsteilchendurchmesser in nm.

| | |
|---|---|
| Emulgatormenge, bezogen auf 100 Gew.-Teile $H_2O$: | 5 Gew.-Teile |
| Anteil eines Alkalisalzes einer Polysulfonsäure: | 15 bis 85 Gew.-% |
| bezogen auf das Gewicht des Emulgatorsystems | |
| Initiatorkonzentration: [I] = | 2 g/1000 g $H_2O$ |
| Gewichtsverhältnis | |
| Monomeres/(Monomeres + Wasser) = | 0,3 |
| Polymerisationszeit: | 7 h |
| Polymerisationstemperatur: | 70° C |
| Rotationsgeschwindigkeit der Flaschen: | 25 Umdrehungen pro Minute |
| Maximal erreichbarer Feststoffgehalt: | 32,49 Gew.-% |
| Reaktionsgefäßvolumen: | 500 ml |

Die Ergebnisse der Versuchsserie sind in Tabelle II zusammengestellt. Mit steigendem Polysulfonatanteil im Emulgatorsystem nimmt der Teilchendurchmesser der jeweiligen Dispersionen zu.

Der mittlere Teilchendurchmesser d der Dispersionen ist, je nach eingesetztem Monomeren, etwa im Bereich von 50 bis 300 nm beliebig einstellbar. Bei der Emulsionspolymerisation von Methylmethacrylat entstehen Dispersionen mit mittleren Teilchendurchmessern über 500 nm. Der Koagulatanteil steigt in diesem Fall mit steigendem Polysulfonatgehalt merklich an (vgl. Zeile 5, Tabelle II).

### Beispiel 3
### (mit Vergleichsbeispielen)

Der gemäß Vorschrift B.1. hergestellte Emulgator, enthaltend ca. 70 Gew.-% Natriumalkanpolysulfonat und ca. 30 Gew.-% Natriumalkanmonosulfonat, wird in vier unterschiedlichen Emulgatorkonzentrationen, nämlich:

50; 10; 1,0; 0,5 [g/1000 g $H_2O$]

zur Polymerisation des Styrols verwendet (vgl. Tabelle III).

Das erfindungsgemäße Emulgatorsystem wird in seiner Wirksamkeit mit 6 verschiedenen anionischen Emulgatoren verglichen, welche unter gleichen Polymerisationsbedingungen eingesetzt werden. Diese anionischen Emulgatoren enthalten keinen Polysulfonatanteil.

Ansätze:

| | |
|---|---|
| Entionisiertes Wasser: | 236,7 g |
| Emulgator(en) | |
| (100% waschaktive Substanz) | 0,13; 0,26; 2,62; 13,7 |
| | (vgl. Tabelle III) |
| 2%ige $K_2S_2O_8$-Lösung: | 26,3 |
| Styrol | 112,5 |

Die Zusammensetzung jedes Emulgatorsystems bleibt somit gleich, die Emulgatorkonzentrationen sind bei gleichem Emulgatorsystem jeweils verschieden.

Die Reaktionsparameter betragen:

| | |
|---|---|
| Gesamtemulgatorkonzentration | |
| bei jedem Emulgatorsystem: | 50; 10; 1,0; 0,5 |
| | [g/1000 g $H_2O$]. |
| Gesamtemulgatormenge, | |
| bezogen auf 100 Gew.-Teile Wasser: | 5; 1,0; 0,1; 0,05 Gew.-Teile |
| Gewichtsverhältnis: | |
| Monomeres/(Monomeres + Wasser) = | 0,3 |
| Polymerisationszeit: | 7 h |
| Polymerisationstemperatur: | 70° C |
| Rotationsgeschwindigkeit der Flaschen: | 25 Umdrehungen pro Minute |
| Reaktionsgefäßvolumen: | 500 ml |
| Maximal erreichbare Feststoffgehalte: 30,12; 30,15; 30,58; 32,46 Gew.-%. | |

Tabelle III

| Emulgatorsystem | Gesamtemulgatorenkonzentration [g Emulgator/1000 g Wasser] | | | | | | | | | | | |
| | 50 | | | 10 | | | 1 | | | 0,5 | | |
| | F (%) | K (%) | d (nm) | F (%) | K (%) | d (nm) | F (%) | K (%) | d (nm) | F (%) | K (%) | d (nm) |
| Emulgator gemäß Vorschrift B-1 (erfindungsgemäß) | 32,1 | 0 | 150 | 30 | 1,5 | 155 | 28,5 | 3,0 | 480 | 27,0 | 0,3 | 530 |
| Sulfobernsteinsäuredioctylester | 31,9 | 0 | 75 | Koagulation | | | Koagulation | | | Koagulation | | |
| p-dodecylbenzolsulfonsaures Natrium | 32,0 | 0 | 70 | 30,2 | 0,5 | 95 | Koagulation | | | Koagulation | | |
| $CH_3$—$(CH_2)_{11}$—O—$(CH_2$—$CH_2$—O$)_{10}$—$OSO_3^{\ominus}$ $NH_4^{\oplus}$ | 32,0 | 0 | 65 | 32,5 | 1,5 | 85 | Koagulation | | | Koagulation | | |
| sec. Paraffinmonosulfonatgemisch mit 14 bis 16 C-Atomen | 32,1 | 0 | 65 | 30,1 | 0,5 | 90 | Koagulation | | | Koagulation | | |
| Natriumlaurylsulfat | 32,0 | 0 | 60 | 30,0 | 0,2 | 77 | Koagulation | | | Koagulation | | |
| (Struktur mit $SO_3^{\ominus}$, $CH_3$, O, $C_{12}H_{25}$) $NH_4^+$ $NH_4^+$ | 32,0 | 0 | 50 | 30,0 | 0,7 | 81 | Koagulation | | | Koagulation | | |

Erläuterungen zu Tabelle III:  F(%) = Feststoffgehalt der Dispersion; K(%) = Koagulatanteil (%), bezogen auf Monomere; d(nm) = mittlerer Latexteilchendurchmesser in nm.

In Tabelle III sind die Ergebnisse der Polymerisationsversuche zusammengestellt. Jede Zeile der Tabelle III bezieht sich auf ein anderes Emulgatorsystem. Die vier Hauptspalten geben, in Abhängigkeit von der Gesamtemulgatorkonzentration (50; 10; 1; 0,5), Feststoffgehalt (F%), Koagulatanteil (Gew.-%, bezogen auf Monomeres) und den mittleren Durchmesser der Dispersionsteilchen, d (in nm), an.

Bei Verwendung des erfindungsgemäßen Emulgatorsystems entstehen, je nach Emulgatorkonzentration, Dispersionen mit Teilchendurchmessern von 150 bis 530 nm (vgl. Zeile 1, Tabelle III).

Dagegen gelingt es bei Verwendung üblicher anionischer Emulgatoren nicht, durch Reduzieren des Emulgatoranteils in vergleichbarer Weise zu grobteiligen Kunststoffdispersionen zu gelangen. Bei Emulgatorkonzentrationen von ca. 1 g/1000 g Wasser tritt bei Verwendung üblicher Emulgatoren vielmehr ein vollständiges Koagulieren der jeweiligen Ansätze ein.

## Beispiel 4
### (mit Vergleichsbeispiel)

Es wird die Wirkungsweise des erfindungsgemäßen, nach Vorschrift 2.1. hergestellten Emulgatorsystems mit der eines Alkylmonosulfonats verglichen (vgl. hierzu Houben-Weyl, Methoden der organischen Chemie, 4. Aufl., Band XIV/1, Makromolekulare Stoffe, Georg Thieme Verlag, Stuttgart, 1961, Seite 871).

In einem mit Blattrührer ausgerüsteten Autoklav von 5,5 bis 6 l Inhalt werden vorgelegt:

| | |
|---|---|
| Entionisiertes Wasser: | 2325,5 g |
| 10%ige wäßrige Emulgatorlösung: | 750,0 g |
| Kaliumperoxodisulfat: | 3,0 g |
| Summe der Komponenten: | 3078,5 g |

Durch Evakuieren und Spülen mit Stickstoff wird der Luftsauerstoff aus dem Autoklavenraum entfernt, dann werden 1500 g Vinylchlorid hinzugegeben und das Reaktionsgemisch unter Rühren (125 Umdrehungen pro Minute) auf 48° C erwärmt.

Nach 10 bis 12 Stunden ist die Polymerisation beendet, erkennbar am Druckabfall des Autoklaveninhalts.

Wird als Emulgator das handelsübliche Alkylmonosulfonat mit ca. 12 bis 18 C-Atomen in der unverzweigten Kette benutzt, so resultiert eine koagulatfreie, dickflüssige, äußerst feinteilige PVC-Dispersion mit einem Dispersionsteilchendurchmesser von etwa 50 nm und einem Feststoffgehalt von etwa 34 Gew.-%. Diese Dispersion ist sehr instabil gegenüber Scherbeanspruchung.

Wird dagegen ein erfindungsgemäßes Emulgatorsystem eingesetzt (vgl. Vorschrift B-1), so entsteht eine koagulatfreie, ca. 32%ige PVC-Dispersion mit Dispersionsteilchendurchmessern von 250 nm, welche leicht beweglich ist und eine sehr gute Scherstabilität besitzt.

## Beispiel 5

Auch an Beispielen der Emulsionspolymerisation in Gegenwart eines Keimlatex kann die erfindungsgemäße Methode, den mittleren Dispersionsteilchendurchmesser mit Hilfe von Polysulfonaten einzustellen, aufgezeigt werden.

Polymerisiert wird ein Monomerengemisch, bestehend aus 51 Gew.-% Acrylsäure-n-butylester, 45 Gew.-% Styrol und 4 Gew.-% Methacrylsäure.

Es werden die Emulgatorsysteme A bis D, wie in Beispiel 2 beschrieben, eingesetzt.

10 Gew.-% des Monomerengemisches werden zur Bildung eines Keimlatex vorgelegt, 90 Gew.-% nachdosiert und auf die vorhandenen Keimlatexteilchen aufpolymerisiert.

Bei vollständigem Monomerenumsatz beträgt der Feststoffgehalt des Keimlatex ca. 10 Gew.-%, der Endlatex hat einen Feststoffgehalt von ca. 46 Gew.-%.

Die Emulgatorkonzentration in der vorgelegten Wassermenge beträgt ca. 9 g/1000 g Wasser, die Initiatorkonzentration 1,5 g/1000 g Wasser.

Die Polymerisationsversuche werden nach den in Tabelle IV zusammengestellten Rezepturen in 1,5-l-Dreihalskolben mit Flügelrührer 250 Umdrehungen pro Minute, Rückflußkühler, Innenthermometer und Tropftrichtern für die Lösungen 5.3., 5.4., 5.5. bei 75° C durchgeführt.

Tabelle IV

| | Dispersion | 5a | 5b | 5c | 5d |
|---|---|---|---|---|---|
| | Entionisiertes Wasser | 400 | 400 | 400 | 400 |
| | Emulgator Mono/Poly-Sulfonat 85 : 15 | 4 | — | — | — |
| 5.1 | Emulgator Mono/Poly-Sulfonat 50 : 50 | — | 4 | — | — |
| | Emulgator Mono/Poly-Sulfonat 30 : 70 | — | — | 4 | — |
| | Emulgator Mono/Poly-Sulfonat 15 : 85 | — | — | — | 4 |
| | Styrol | 22,5 | 22,5 | 22,5 | 22,5 |
| 5.2 | n-Butylacrylat | 25,5 | 25,5 | 25,5 | 25,5 |
| | Methacrylsäure | 2,0 | 2,0 | 2,0 | 2,0 |
| 5.3 | Entionisiertes Wasser | 50,0 | 50,0 | 50,0 | 50,0 |
| | $(NH_4)_2S_2O_8$ | 0,7 | 0,7 | 0,7 | 0,7 |
| | Styrol | 202,5 | 202,5 | 200,5 | 202,5 |
| 5.4 | n-Butylacrylat | 229,5 | 229,5 | 229,5 | 229,5 |
| | Methacrylsäure | 18,0 | 18,0 | 18,0 | 18,0 |
| | Entionisiertes Wasser | 140,0 | 140,0 | 140,0 | 140,0 |
| | $(NH_4)_2S_2O_8$ | 2,3 | 2,3 | 2,3 | 2,3 |
| | Emulgator Mono/Poly-Sulfonat 85 : 15 | 3,5 | — | — | — |
| 5.5 | Emulgator Mono/Poly-Sulfonat 50 : 50 | — | 3,5 | — | — |
| | Emulgator Mono/Poly-Sulfonat 30 : 70 | — | — | 3,5 | — |
| | Emulgator Mono/Poly-Sulfonat 15 : 85 | — | — | — | 3,5 |
| | Feststoffgehalt (Gew.-%) | 46,3 | 46,3 | 46,3 | 46,3 |
| | Koagulat (g) | 3,5 | 4,0 | < 0,1 | < 0,1 |
| | Mittlerer Dispersionsteilchendurchmesser d (nm) | 92 | 133 | 260 | 280 |
| | Maß für die Breite der Teilchengrößenverteilung: K 2 | 0,07 | 0,03 | 0,02 | 0,01 |
| | Auslaufzeit im Auslaufbecher nach DIN 53211, 4 mm Düse; Latex pH = 8,5 (sec) | 24 | 14 | 13 | 12,5 |
| | Mittlere Filmbildtemperatur gemäß DIN 53787, 90µ Naßfilmdicke, Luftstrom 0,6 cm/sec; Temperatur der eintretenden Luft: 0°C; Latex pH = 8,5 | 19,5 | 21 | 22 | 22 |

15

Die jeweilige Emulgatorlösung (vgl. Tabelle IV, 5.1.) wird unter Stickstoff vorgelegt, danach das Monomerengemisch 5.2. (vgl. Tabelle IV) hinzugefügt und auf 75°C aufgeheizt.

Nach Erreichen der Polymerisationstemperatur (75°C) wird die Polymerisation durch Zugabe der Lösung 5.3. (vgl. Tabelle IV) eingeleitet. Es bildet sich ein ca. 10%iger Keimlatex. Sobald die Polymerisationswärme abgeklungen ist, wird das Monomerengemisch 5.4. (vgl. Tabelle IV) sowie die Emulgator-Aktivatorlösung 5.5. (vgl. Tabelle IV) im Verlauf von 3 Stunden zugetropft, wobei die Temperatur des Reaktionsgemisches auf 75°C festgehalten wird.

Nach beendeter Zugabe der Mengenströme 5.4. und 5.5. wird zur Vervollständigung des Monomerenumsatzes noch 3 Stunden bei 75°C nachgerührt.

Es wurden stabile, nahezu koagulatfreie Dispersionen erhalten, deren Teilchengrößen (vgl. Tabelle IV, Zeile 22) mit steigendem Polysulfonatgehalt erfindungsgemäß zunimmt.

Werden die Dispersionen mit ca. 20%iger wäßriger $NH_3$-Lösung auf pH = 8,5 eingestellt, so tritt eine von der Latexteilchendurchmessergröße abhängige Verdickung ein (vgl. Zeile 24, Tabelle IV).

Auch die mittlere Filmbildetemperatur (vgl. Zeile 25, Tabelle IV) hängt von der Teilchengröße ab.


Beispiel 6

Mit Hilfe erfindungsgemäßer Emulgatorsysteme lassen sich Dispersionen mit Feststoffgehalten bis beispielsweise 50 Gew.-% nach ganz einfachen Polymerisationsrezepturen herstellen:


Tabelle V

|  |  | Versuchs-bezeichnung | 6 A | 6 B | 6 C | 6 D |
|---|---|---|---|---|---|---|
|  |  | Entionisiertes Wasser | 1500 g | 1500 g | 1500 g | 1500 g |
|  | 6.1 | Emulgatorsystem gemäß Vorschrift B-2 (70 Gew.-% Poly-sulfonat) | 150 g | 75 g | 37,5 g | 15 g |
|  |  | $K_2S_2O_8$ | 3 g | 3 g | 3 g | 3 g |
|  | 6.2 | n-Butylacrylat | 750 g | 750 g | 750 g | 750 g |
|  | 6.3 | n-Butylacrylat Zulauf in 60 min | 750 g | 750 g | 750 g | 750 g |

In einem 3,5-l-Dreihalskolben mit Rührer (250 Umdrehungen pro Minute), Rückflußkühler, Innenthermometer und Tropftrichter für einen Teil des n-Butylacrylats (vgl. Tabelle V, 6.3.) wird die wäßrige Emulgator-Aktivatorlösung gefüllt (vgl. Tabelle V, 6.1.), danach die Hälfte des ingesamt zu polymerisierenden n-Butylacrylats (vgl. Tabelle V, 6.2.). Das emulgierte Gemisch, bestehend aus 6.1. und 6.2. wird auf 70°C aufgeheizt. Nach Einsetzen der Polymerisation wird das restliche Butylacrylat im Verlauf von 60 Minuten zudosiert, und es wird zur Vervollständigung der Polymerisation noch 2 Stunden nachgerührt.

Die Dispersionen sind wie folgt gekennzeichnet:

| Dispersion | 6 A | 6 B | 6 C | 6 D |
|---|---|---|---|---|
| Koagulat (g) | 15 | 0,3 | 1,0 | 5,0 |
| Feststoffgehalt Gew.-% | 52,2 | 50,8 | 50,3 | 50,2 |
| Latexteilchen-Durchmesser (nm) | 330 | 230 | 195 | 195 |
| K 2 Maß für die Einheit-lichkeit | 0,3 | 0,02 | 0,01 | 0,03 |

Bei anfänglichen Emulgatorkonzentrationen im Bereich von 10 Gew.-Teilen bis 5 Gew.-Teilen Emulgator, bezogen auf 100 Gew.-Teile Wasser, nimmt demnach die Teilchengröße der Dispersionsteilchen mit abnehmender Emulgatorkonzentration ab.

Gegenüber einem entsprechend hergestellten, ca. 30 Gew.-% Feststoff enthaltenden Latex (vgl. Tabelle II, Zeile 2, 70 : 30-Polysulfonat-Monosulfonat-Verhältnis) sind vorliegend die Latexteilchen um den Faktor 1,3 bis 2,2 vergrößert. Der mit dem höchsten Emulgatoranteil hergestellte Latex, 6 A, besitzt eine breitere Latexteilchendurchmesserverteilung als die Produkte 6 B, 6 C und 6 D.

Beispiel 7

Es wird gezeigt, daß Kombinationen von Polysulfonaten mit üblichen anionischen Emulgatoren und nichtionogenen Emulgatoren koagulatfreie Dispersionen mit einheitlichen Latexteilchendurchmessern ergeben (vgl. Tabelle VII, Versuche a bis f).

Hierbei steigt mit steigendem Polysulfonatanteil im Emulgatorsystem die Teilchengröße erfindungsgemäß an.

Ist im Emulgatorsystem fast nur noch Polysulfonat und nichtionogener Emulgator enthalten (vgl. Tabelle VII, Versuche h und i), so entstehen verhältnismäßig grobteilige, koagulatfreie Dispersionen. Wird lediglich nichtionogener Emulgator eingesetzt (vgl. Tabelle VII, Versuch j), so entsteht eine grobteilige Dispersion mit sehr uneinheitlichen Teilchen (K 2-Wert liegt bei 0,6!) und sehr viel Koagulat (26 g).

Polysulfonathaltige Emulgatoren lassen sich auch vorteilhaft mit Harzseifen kombinieren (vgl. Tabelle VII, Versuche k bis n). Durch den Polysulfonatzusatz wird die Einheitlichkeit der Latexteilchen verbessert und die Stabilität der Dispersionen gegen pH-Änderungen wesentlich erhöht. Bemerkenswerterweise werden die Latexteilchendurchmesser durch den Disulfonatzusatz zum Emulgatorsystem nicht wesentlich herabgesetzt. Dieser Effekt läßt sich nutzen zur Herstellung von Harzseife enthaltenden grobdispersen Dispersionen verbesserter pH-Stabilität, beispielsweise zur Herstellung grobteiliger Butadien- oder Chloroprendispersionen.

Die in Tabelle VII angeführten Versuche wurden gemäß der Arbeitsvorschrift C durchgeführt.

| | |
|---|---|
| Polymerisationstemperatur: | 70° C |
| Polymerisationsdauer: | 7 h |
| Rotationsgeschwindigkeit der 500-ml-Flaschen: | 25 Umdrehungen pro Minute |

Gesamtemulgatorkonzentration [E] = 50 g/1000 g H$_2$O
Emulgatormenge, bezogen auf 100 Gew.-Teile Wasser: 5 Gew.-Teile.

## Tabelle VII

| | | a | b | c | d | e | f | g |
|---|---|---|---|---|---|---|---|---|
| (g) | Entionisiertes Wasser | 118,3 | 118,3 | 118,3 | 118,3 | 118,3 | 118,3 | 118,3 |
| (g) | sek. Alkylmonosulfonat mit 12 bis 18 C-Atomen, 10%ige wäßrige Lösung | 43,3 | 32,5 | 16,3 | 43,3 | 32,5 | 16,3 | – |
| (g) | 10%ige wäßrige Lösung von $C_9H_{19}$—⟨⟩—$O$—$(CH_2$—$CH_2$—$O)_{30}$—$H$*) | 43,3 | 32,5 | 16,3 | – | – | – | – |
| (g) | 10%ige wäßrige Lösung von $C_9H_{19}$—⟨⟩—$O(CH_2$—$CH_2$—$O)_{20}$—$H$*) | – | – | – | 43,3 | 32,5 | 16,3 | – |
| (g) | 10%ige wäßrige Lösung des Natriumsalzes des Natriumsalzes der Dehydroabietinsäure (handelsübliches Produkt) | – | – | – | – | – | – | |
| (g) | 10%ige wäßrige Lösung des Emulgators gemäß Vorschrift B.1 (70% Polysulfonat) | 43,3 | 65,0 | 97,5 | 43,3 | 65,0 | 97,5 | 130 |
| (g) | 2%ige wäßrige $K_2S_2O_8$-Lösung | 26,2 | 26,2 | 26,2 | 26,2 | 26,2 | 26,2 | 26,2 |
| (g) | Acrylsäure-n-butylester | 112,5 | 112,5 | 112,5 | 112,5 | 112,5 | 112,5 | 112,5 |
| | Latexmenge (g) | 386 | 386 | 386 | 386 | 386 | 385 | 386 |
| | Ausfall (g) | 0 | 0 | 0 | 0 | 0 | 0 | 0 |
| | Feststoffgehalt Latex (g) | 32 | 32 | 32 | 32 | 32 | 32 | 32 |
| | Latexteilchendurchmesser (nm) | 87 | 95 | 126 | 87 | 98 | 129 | 160 |
| | K 2 (Maß für Einheitlichkeit der Latexteilchen) | 0,15 | 0,06 | 0,05 | 0,06 | 0,2 | 0,15 | 0,10 |

Erläuterung zur Tabelle VII: *) ca. 30 bzw. 20 Ethylenoxideinheiten pro Mol p-Nonylphenol.

0 036 904

(Fortsetzung)

|  |  | h | i | j | k | l | m | n |
|---|---|---|---|---|---|---|---|---|
| (g) | Entionisiertes Wasser | 113,8 | 118,3 | 118,3 | 118,3 | 118,3 | 118,3 | 118,3 |
| (g) | sek. Alkylmonosulfonat mit 12 bis 18 C-Atomen, 10%ige wäßrige Lösung | – | – | – | – | – | – | – |
| (g) | 10%ige wäßrige Lösung von $C_9H_{19}-\!\!\langle\ \rangle\!\!-O-(CH_2-CH_2-O)_{30}-H$ | – | – | – | – | – | – | – |
| (g) | 10%ige wäßrige Lösung von $C_9H_{19}-\!\!\langle\ \rangle\!\!-O(CH_2-CH_2-O)_{20}-H$ | 52 | 78 | 130 | – | – | – | – |
| (g) | 10%ige wäßrige Lösung des Natriumsalzes des Natriumsalzes der Dehydroabietinsäure (handelsübliches Produkt) | – | – | – | 130 | 65 | 32,5 | 13 |
| (g) | 10%ige wäßrige Lösung des Emulgators gemäß Vorschrift B.1 (70% Polysulfonat) | 78 | 52 | – | 0 | 65 | 97,5 | 117 |
| (g) | 2%ige wäßrige $K_2S_2O_8$-Lösung | 26,2 | 26,2 | 26,2 | 26,2 | 26,2 | 26,2 | 26,2 |
| (g) | Acrylsäure-n-butylester | 112,5 | 112,5 | 112,5 | 112,5 | 112,5 | 112,5 | 112,5 |
|  | Latexmenge (g) | 386 | 387 | 325 | 387 | 381 | 382 | 387 |
|  | Ausfall (g) | 0 | 0 | 26 | 1,6 | 1,1 | 0,4 | 0,3 |
|  | Feststoffgehalt Latex (g) | 32 | 32 | 27 | 32 | 32 | 32 | 32 |
|  | Latexteilchendurchmesser (nm) | 150 | 161 | 325 | 160 | 150 | 155 | 155 |
|  | K 2 (Maß für Einheitlichkeit der Latexteilchen) | 0,1 | 0,35 | 0,6 | 0,43 | 0,05 | 0,06 | 0.10 |

0 036 904

**0 036 904**

## Patentansprüche

1. Verfahren zur Einstellung eines mittleren Teilchendurchmessers von Dispersionsteilchen in wäßrigen Kunststoffdispersionen, hergestellt durch Polymerisation der Monomeren des Kunststoffes in Gegenwart von Wasser, eines Initiators und eines Emulgatorsystems, dadurch gekennzeichnet, daß man die Gesamtmenge des Initiators und des Emulgatorsystems, das einen Anteil eines Alkalisalzes einer Polysulfonsäure eines Alkans mittlerer Kettenlängen enthält, etwa gleich hält und den Anteil des Alkalisalzes der Polysulfonsäure im Bereich von 15 bis 100 Gew.-Teilen, bezogen auf 100 Gew.-Teile des gesamten Emulgatorsystems, verändert.

2. Verfahren nach Anspruch 1, dadurch gekennzeichnet, daß die Gesamtmenge des Emulgatorsystems bei der Polymerisation 0,05 bis 10 Gew.-Teile, bezogen auf 100 Gew.-Teile des Wassers, beträgt.

3. Verfahren nach den Ansprüchen 1 und 2, dadurch gekennzeichnet, daß 100 Gew.-Teile des Emulgatorsystems 0 bis 85 Gew.-Teile eines üblichen Emulgators und 100 bis 15 Gew.-Teile eines Alkalisalzes einer Polysulfonsäure eines Alkans mittlerer Kettenlänge enthalten.

4. Verfahren nach den Ansprüchen 1 bis 3, dadurch gekennzeichnet, daß man zunächst einen Keimlatex mit definiertem Durchmesser der einzelnen Partikel herstellt und danach nach dem an sich bekannten Keimlatexverfahren Partikel bis zu einem Durchmesser von etwa 1000 nm erhält.

## Claims

1. Process for establishing an average particle diameter of dispersion particles in aqueous dispersions of plastics prepared by polymerisation of the monomers of the plastic in the presence of water, an initiator and an emulsifier system, characterised in that the total amount of the initiator and of the emulsifier system, which contains a proportion of an alkali metal salt of a polysulphonic acid of an alkane of medium chain length, is maintained approximately constant and the proportion of the alkali metal salt of the polysulphonic acid is changed in the range from 15 to 100 parts by weight per 100 parts by weight of the total emulsifier system.

2. Process according to Claim 1, characterised in that the total amount of emulsifier system in the polymerisation is 0.05 to 10 parts by weight per 100 parts by weight of water.

3. Process according to Claims 1 and 2, characterised in that 100 parts by weight of the emulsifier system contain 0 to 85 parts by weight of a conventional emulsifier and 100 to 15 parts by weight of an alkali metal salt of a polysulphonic acid of an alkane of medium chain length.

4. Process according to Claims 1 to 3, characterised in that a seeding latex with a defined diameter of the individual particles is first prepared and then particles up to a diameter of about 1,000 nm are obtained by the seeding latex process which is in itself known.

## Revendications

1. Procédé pour régler un diamètre moyen de particules dispersées dans des dispersions aqueuses de matières plastiques, préparées par polymérisation des monomères de la matière plastique en présence d'eau, d'un initiateur et d'un système émulsionnant, caractérisé en ce qu'on maintient à peu près égale la quantité totale d'initiateur et de système émulsionnant qui contient une proportion d'un sel alcalin d'un acide polysulfonique d'un alcane de longueur de chaîne moyenne, et on fait varier la proportion du sel alcalin de l'acide polysulfonique dans la plage de 15 à 100 parties en poids, par rapport à 100 parties en poids du système émulsionnant total.

2. Procédé suivant la revendication 1, caractérisé en ce que la quantité totale du système émulsionnant s'élève lors de la polymérisation à 0,05 – 10 parties en poids pour 100 parties en poids d'eau.

3. Procédé suivant les revendications 1 et 2, caractérisé en ce que 100 parties en poids du système émulsionnant contiennent 0 à 85 parties en poids d'un émulsionnant classique et 100 à 15 parties en poids d'un sel alcalin d'un acide polysulfonique d'un alcane de longueur de chaîne moyenne.

4. Procédé suivant les revendications 1 à 3, caractérisé en ce qu'on prépare tout d'abord un latex d'amorçage dont le diamètre des particules individuelles est bien défini, puis on obtient par le procédé connu au latex d'amorçage des particules dont le diamètre va jusqu'à environ 1000 nm.